# EUROPEAN PATENT SPECIFICATION

(11) **EP 3 637 163 B1**
(45) Date of publication and mention of the grant of the patent: **20.12.2023**
(21) Application number: 19174404.4
(22) Date of filing: 14.05.2019
(51) Int. Cl.: G02B 6/028, G02B 6/036

(54) **EASY-TO-INSERT WATERPROOF OPTICAL FIBER CONNECTOR**
EINFACH EINZUFÜHRENDER WASSERDICHTER GLASFASERVERBINDER
CONNECTEUR DE FIBRE OPTIQUE ÉTANCHE FACILE À INSÉRER

(30) Priority: 08.10.2018 CN 201811166042
(43) Date of publication of application: 15.04.2020
(73) Proprietor: YANGTZE OPTICAL FIBRE AND CABLE JOINT STOCK LIMITED COMPANY, East Lake High-tech Development Zone Wuhan Hubei 430073 (CN)
(72) Inventor: Gong, Penglin, Wuhan, Hubei 430073 (CN); ZHU, Xiuyong, Wuhan, Hubei 430073 (CN)
(74) Representative: Laufhütte, Dieter

(56) References cited:
- WO-A1-2016/000248
- CN-A- 108 459 380
- JP-A- 2012 018 253
- US-A1- 2009 148 101
- US-A1- 2018 003 910
- US-A1- 2018 224 610

## Description

### FIELD OF THE INVENTION

The present disclosure relates to an easy-to-insert waterproof optical fiber connector, and belongs to the technical field of optical fiber communications.

### BACKGROUND OF THE INVENTION

With the rapid development of the internet and optical networks, waterproof optical fiber connectors become more and more widely used. An existing waterproof optical fiber connector is provided with a waterproof case based on a traditional optical fiber connector. The disadvantages of such a connector are that: a size thereof is not small enough, the waterproof case and the traditional optical fiber connector cannot be integrated, and the installation needs to be performed in two steps. Moreover, the waterproof case and the traditional connector are connected by means of a cable; while the connector is inserted or pulled out, a force does not directly act on a plug of the connector, which is liable to cause cable deformation and damage. There also exits an optical fiber connector having a threaded connection structure, which needs to be rotated for multiple turns during assembly and disassembly and is very inconvenient to use. There is also a locking structure having a bump and a sliding groove. The bump is screwed into a groove of the sliding groove to realize locking, but there is no self-locking protection, and when a cable is twisted under force, the bump is liable to slide out of the groove to cause looseness.

US 2018/224610 A1 relates to an optical fiber connector for external connection to a telecommunications enclosure. The optical fiber connector has an assembly base having a first end and a second end, an optical connection portion disposed partially within the first end of the assembly base and a strain relief assembly disposed on the second end of the assembly base. The assembly base includes a body portion and a release portion which defines a release mechanism that causes the release portion to move relative to the body portion. The release portion includes at least one cam that is configured to release or disengage at least one latch element when the release portion moves with respect to the body portion so that the optical fiber connector can be removed from the port of the telecommunication enclosure.

WO 2016/000248 A1 relates to an optical fiber connector that comprises an adaptor assembly and a joint assembly. The adaptor assembly comprises a housing and an optical fiber adaptor, and a first end of the housing is provided with at least one resilient arm with a hook. The joint assembly comprises a first frame, an optical fiber joint and a second frame. A snap-in groove is provided on the periphery of the end of the first frame facing towards the housing. The first frame is socketed into the first end of the housing through the end facing towards the housing, the optical fiber joint is socketed into the optical fiber adaptor, the hook of the resilient arm snaps in the snap-in groove, and the second frame is located on the periphery of the first frame and the resilient arm to hoop the hook tightly in the snap-in groove. The adaptor assembly is connected to the joint assembly by the matching of the resilient arm and the snap-in groove, enabling easy handling.

### SUMMARY OF THE INVENTION

With respect to the above deficiencies existing in the prior art, the technical problem to be solved by the present invention is to provide an easy-to-insert waterproof optical fiber connector, which not only has advantages of compact structure, reasonable arrangement, and good waterproof performance, but also is simple to be inserted and pulled out and realizes a reliable connection.

In order to solve the above problem, a waterproof optical fiber connector according to independent claim 1 is provided. Further embodiments are provided by the dependent claims.

When using the waterproof optical fiber connector and the adapter assembly is inserted into the connector assembly, the locking claws on the adapter make contact with the outer circumference of the connector cylinder, thereby causing the locking claws to flare outward. The front ends of the flared locking claws abut an end surface of the elastic sleeve, so that the elastic sleeve is moved backward. The snaps at the front ends of the locking claws go beyond the small bosses and enter the locking grooves. The locking claws are retracted, and an outer diameter thereof is reduced. In this case, the locking claws no longer abut the end surface of the elastic sleeve. Under the action of a spring force, the elastic sleeve moves forward to a stop position, and the locking claws are wrapped in the elastic sleeve, so that the locking claws are locked in the locking grooves. Thus, the two assemblies are quickly inserted and self-locked, so that the connector and the adapter are fixedly connected. When the adapter assembly needs to be pulled out of the connector assembly, the elastic sleeve of the connector assembly is pushed backward to expose the snaps at the front ends of the locking claws. In this case, the locking claws of the adapter assembly can be removed from the locking grooves, so that the adapter assembly is smoothly pulled out. The whole operation process can be summarized as follows: when the adapter assembly is inserted into the connector assembly, waterproof sealing and self-locking are achieved; when a cable is pulled, the two assemblies can withstand a pulling force that meets design requirements, and do not get loose; when the sleeve is moved (the sleeve is moved in a direction away from the adapter), the connector can be separated from the adapter. The operation process is very simple.

The present invention has following beneficial effects of: 1. simple and compact structure, reasonable arrangement, small outer diameter, and good waterproofness; and 2. convenient use for insertion and extraction, strong self-locking function, and reliable connection performance. The connector and the adapter are fixedly connected, easy to use, and can withstand a strong pulling force.

### BRIEF DESCRIPTION OF THE DRAWINGS

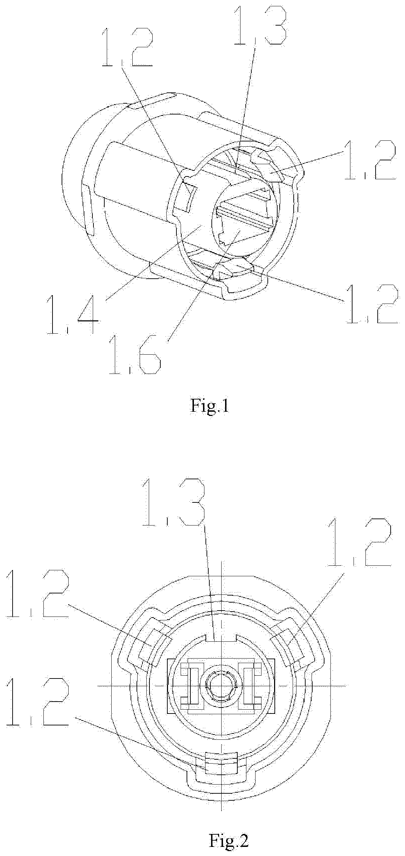

Fig. 1 is a perspective view showing a structure of an adapter in one embodiment of the claimed invention;
Fig. 2 is a bottom view of an adapter in one embodiment of the claimed invention;

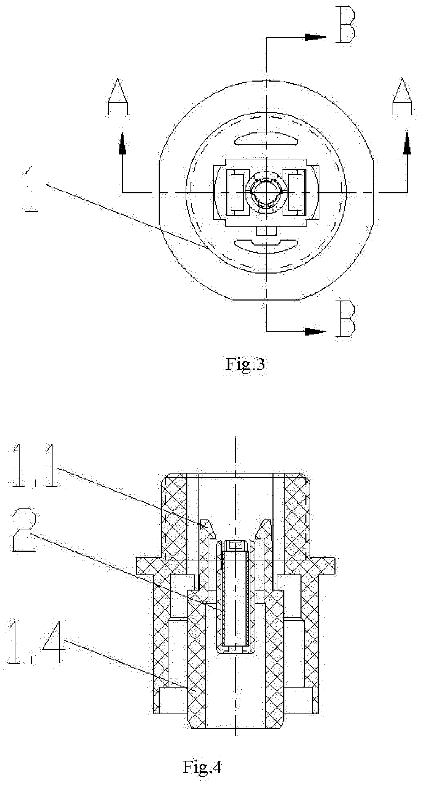

Fig. 3 is a top view of an adapter in one embodiment of the claimed invention;
Fig. 4 is a cross-section view along an A-A line in Fig. 3;

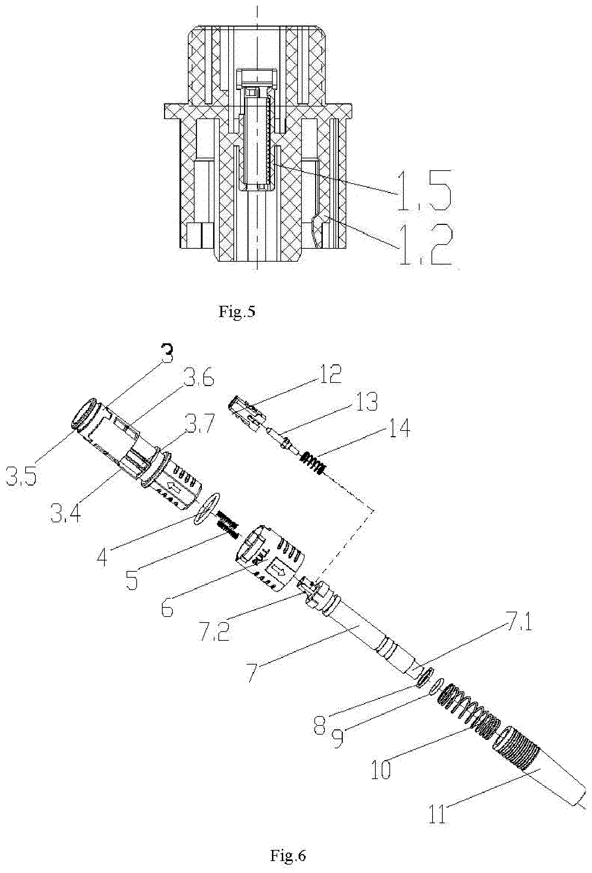

Fig. 5 is a cross-section view along a B-B line in Fig. 3;
Fig. 6 is a perspective exploded view showing a structure of a connector assembly in one embodiment of the claimed invention;

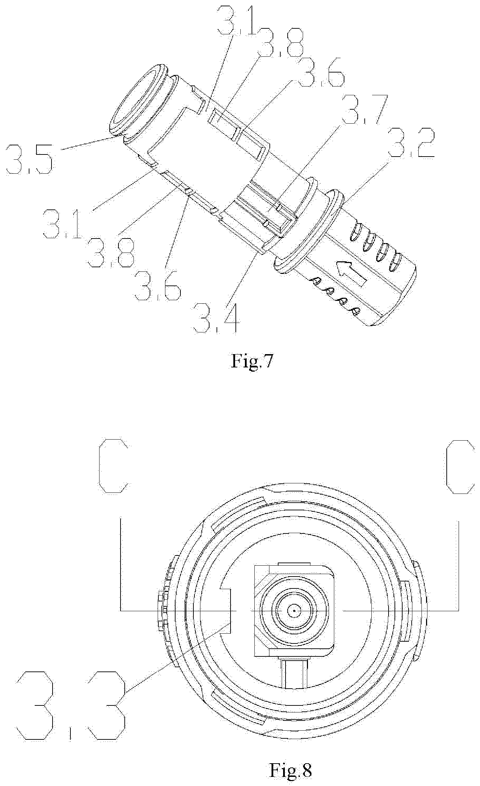

Fig. 7 is a perspective view of a connector cylinder in one embodiment of the claimed invention;
Fig. 8 is a top view of a connector assembly in one embodiment of the claimed invention;

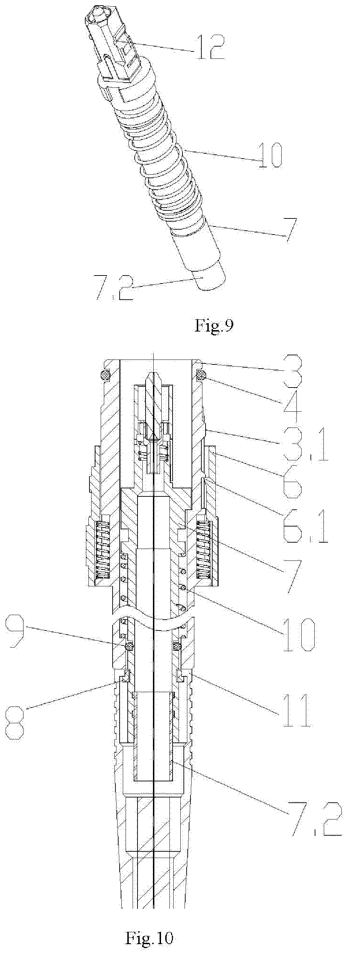

Fig. 9 is a perspective view of a connector ferrule assembly in one embodiment of the claimed invention;
Fig. 10 is a cross-section view along a C-C line in Fig. 8;

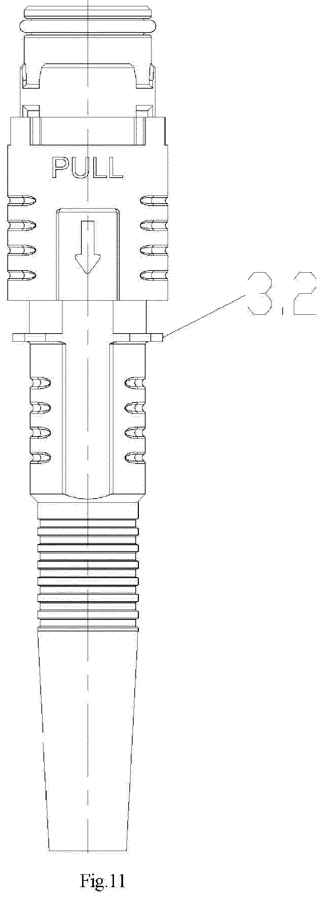

Fig. 11 is a front view of a connector assembly in one embodiment of the claimed invention; and

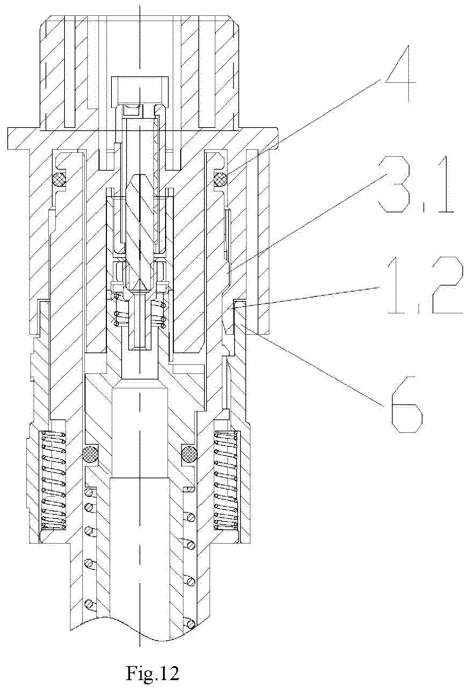

Fig. 12 is a front cross-section view of a connecting portion between an adapter and a connector in one embodiment of the claimed invention.

### DETAILED DESCRIPTION OF THE EMBODIMENTS

The present invention will be explained in detail bellow with reference to the embodiments and the accompanying drawings.

An easy-to-insert waterproof optical fiber connector comprises an adapter assembly and a connector assembly. The adapter assembly comprises an adapter cylinder 1, in which a front cavity and a rear cavity are provided. The front cavity is provided with an inner connection cylinder 1.4. The inner connection cylinder and an inner wall of the adapter cylinder are provided therebetween with locking claws 1.2. The rear cavity is provided with hooks 1.1. The locking claws comprise three circumferentially spaced axial locking claws. A front end of each axial locking claw is provided with an inwardly projecting snap, and a rear end of each axial locking claw is connected with the adapter cylinder in a fixed manner. A nest 1.5 is provided at a rear end of an inner hole of the inner connection cylinder. The nest extends to the rear cavity, and is provided therein with a ceramic sleeve 2. The adapter cylinder comprises a front end head and a rear end head. The front end head and the rear end head are provided therebetween with a stop shoulder having a greater outer diameter. Three arched bosses corresponding to the locking claws are provided on an outer circumference of the front end head. The inner connection cylinder is round outside but square inside. A guide groove 1.3 is provided on an outer circumferential surface of the inner connection cylinder. An inner hole 1.6 has a square shape. An inner hole of the adapter cylinder is a stepped inner hole having a large front portion and a small rear portion which form the front cavity and the rear cavity. The hooks provided in the rear cavity are connected with a rear end of the inner connection cylinder. The locking claws and a front end of the inner connection cylinder extend a distance beyond the front end head of the adapter cylinder, and a front end surface of the inner connection cylinder is 2-3 mm lower than the locking claws. An SC-type optical connector or other types of optical fiber connectors can be mounted in a first end of the adapter assembly, and a second end thereof is connected with the connector assembly of the present disclosure. The hooks are used to fix an SC-type optical connector.

The connector assembly comprises a connector cylinder 3. A sealing groove 3.5, locking grooves 3.8 configured to match the locking claws, stop blocks 3.6, and spring seats 3.7 are provided at intervals from front to rear on an outer circumference of the connector cylinder. A stop shoulder 3.2 is further provided in the rear of the spring seats. A sealing ring 4 is provided in the sealing groove. Three locking grooves are correspondingly provided along the outer circumference of the connector cylinder. Each of the locking grooves is provided at a front end thereof with a small boss 3.1. The locking grooves are configured with the locking claws. A front end of an inner hole of the connector cylinder is provided with a positioning bump 3.3, and the positioning bump is configured with the guide groove 1.3 provided on the outer circumferential surface of the inner connection cylinder, such that the adapter assembly and the connector assembly are positioned in an insert-in manner. An elastic sleeve is sleeved in a middle front portion of the connector cylinder. The locking grooves configured to match the locking claws of an adapter are provided on the outer circumference of the connector cylinder in the elastic sleeve. The elastic sleeve comprises a sleeve 6 sleeved on an outer circumference of a front portion of the connector cylinder. A front end of an inner hole of the sleeve is provided with stop bosses 6.1, which are configured to match the stop blocks 3.6 on the outer circumference of the connector cylinder and function as front stops. A rear end of the inner hole of the sleeve is provided with spring cavities configured to match the spring seats 3.7 of the connector cylinder. Each spring cavity is provided with a reset spring 5, and a rear end of each reset spring is configured to match a spring seat. 2-3 reset springs are circumferentially provided. Three arched inner bosses are correspondingly provided on an outer circumference of a front end of the sleeve, and the inner bosses are located in inner cavities of the bosses of the adapter cylinder while inserted.

The connector cylinder is provided therein with a ferrule assembly, which comprises a ferrule sleeve 7. A sealing groove is provided at a rear portion of the ferrule sleeve, the sealing groove being provided therein with a sealing ring 9 configured to match the inner hole of the connector cylinder. A buffer spring 10 is sleeved in a middle portion of the ferrule sleeve and in front of the sealing ring. A positioning groove is provided at a rear end of the ferrule sleeve. The positioning groove is provided with an elastic snap ring 8, which is used to position the ferrule sleeve on the connector cylinder 3 and connected to a sheath 11 in a snap-fitted manner. A tail portion of the connector cylinder is connected with a metal connecting sleeve 7.2 used to fix an optical fiber. A ferrule snap sleeve 12 is provided at a front end surface of the ferrule sleeve. The ferrule snap sleeve is connected with the ferrule sleeve by means of a fixing connecting sleeve 7.1 at a front end of the ferrule sleeve. The ferrule snap sleeve is provided therein with a ferrule spring 14 and a ceramic ferrule 13. A front end of the ferrule assembly is configured to match the inner hole of the inner connection cylinder at a front portion of the adapter cylinder.

## Claims

1. A waterproof optical fiber connector, comprising an adapter assembly and a connector assembly,
wherein the adapter assembly comprises an adapter cylinder (1), in which a front cavity and a rear cavity are provided; the front cavity is provided with an inner connection cylinder (1.4); the inner connection cylinder (1.4) and an inner wall of the adapter cylinder are provided therebetween with locking claws (1.2); the rear cavity is provided with hooks (1.1); a nest (1.5) is provided at a rear end of an inner hole of the inner connection cylinder (1.4); the nest (1.5) extends to the rear cavity, and is provided therein with a ceramic sleeve (2), and
wherein the connector assembly comprises a connector cylinder (3); a sealing ring (4) configured to match an inner hole of the front cavity of an adapter is provided on an outer circumference of a front end of the connector cylinder (3); an elastic sleeve is sleeved in a middle front portion of the connector cylinder (3); locking grooves (3.8) configured to match the locking claws (1.2) of the adapter are provided on an outer circumference of the connector cylinder (3) in the elastic sleeve; an inner hole of the connector cylinder (3) is provided with a ferrule assembly, a front end of which is configured to match the inner hole of the inner connection cylinder (1.4) at a front portion of the adapter cylinder (1), wherein the adapter cylinder (1) comprises a front end head and a rear end head; **characterized in that**
the front end head and the rear end head are provided therebetween with a stop shoulder having a greater outer diameter; arched bosses corresponding to the locking claws (1.2) are provided on an outer circumference of the front end head; the inner connection cylinder (1.4) is round outside but square inside; a guide groove (1.3) is provided on an outer circumferential surface of the inner connection cylinder (1.4); an inner hole of the adapter cylinder (1) is a stepped inner hole having a large front portion and a small rear portion which form the front cavity and the rear cavity; the hooks (1) provided in the rear cavity are connected with a rear end of the inner connection cylinder (1.4); wherein a sealing groove (3.5), locking grooves (3.8) configured to match the locking claws (1.2), stop blocks (3.6), and spring seats (3.7) are provided at intervals from front to rear on the outer circumference of the connector cylinder (3); a sealing ring (4) is provided in the sealing groove (3.5); a front end of the inner hole of the connector cylinder (3) is provided with a bump (3.3) configured to match the guide groove (1.3) provided on the outer circumferential surface of the inner connection cylinder (3); and wherein the elastic sleeve comprises a sleeve (6) sleeved on an outer circumference of a front portion of the connector cylinder (3); a front end of an inner hole of the sleeve (6) is provided with stop hole shoulders (6.1) configured to match stop blocks (3.6) on the outer circumference of the connector cylinder (3) and acting as front stoppers; a rear end of the inner hole of the sleeve (6) is provided with spring cavities, each of which is configured to match a spring seat (3.7) of the connector cylinder (3); each spring cavity is provided with a reset spring (5), and a rear end of each reset spring (5) is configured to match each spring seat (3.7).

2. The waterproof optical fiber connector according to claim 1, wherein the locking claws (1.2) and a front end of the inner connection cylinder (1.) extend a distance beyond the front end head of the adapter cylinder (1), and a front end surface of the inner connection cylinder (1.4) is lower than the locking claws (1.2).

3. The waterproof optical fiber connector according to claim 1 or 2, wherein the locking claws (1.2) comprise 3-5 circumferentially spaced axial locking claws; a front end of each axial locking claw is provided with an inwardly projecting snap, and a rear end of each axial locking claw is connected with the adapter cylinder (1) in a fixed manner; 3-5 locking grooves are correspondingly provided along the outer circumference of the connector cylinder (3), and a front end of each locking groove is provided with a small boss (3.1).

4. The waterproof optical fiber connector according to claim 3, wherein 3-5 bosses corresponding to the locking claws (1.2) are provided on an outer circumference of the front end head of the adapter cylinder (1); 3-5 arched inner bosses are correspondingly provided on an outer circumference of a front end of the sleeve (6), and the inner bosses are located in inner cavities of the bosses of the adapter cylinder (1) while inserted.

5. The waterproof optical fiber connector according to claim 1 or 2, wherein the ferrule assembly comprises a ferrule sleeve (7); a sealing groove (9) is provided at a rear portion of the ferrule sleeve (7), the sealing groove being provided therein with a sealing ring (9) configured to match the inner hole of the connector cylinder (3); a buffer spring (10) is sleeved in a middle portion of the ferrule sleeve (7); a positioning groove is provided at a rear end of the ferrule sleeve (7), the positioning groove being provided with an elastic snap ring (8) which is connected to a sheath; and a front end surface of the ferrule sleeve (7) is provided with a ferrule snap sleeve (12), the ferrule snap sleeve (12) being provided therein with a ferrule spring (14) and a ceramic ferrule (13).

6. The waterproof optical fiber connector according to claim 1 or 2, wherein a rear end of the adapter assembly is connected with an SC-type optical fiber connector; and a rear end of the connector assembly receives an optical cable and is configured to match a sheath.

## Patentansprüche

1. Wasserdichter faseroptischer Verbinder, umfassend eine Adapteranordnung und eine Verbinderanordnung,
wobei die Adapteranordnung einen Adapterzylinder (1) umfasst, in dem ein vorderer Hohlraum und ein hinterer Hohlraum vorgesehen sind; wobei der vordere Hohlraum mit einem inneren Verbindungszylinder (1.4) versehen ist; wobei der innere Verbindungszylinder (1.4) und eine Innenwand des Adapterzylinders dazwischen mit Verriegelungsklauen (1.2) versehen sind; wobei der hintere Hohlraum mit Haken (1.1) versehen ist; wobei ein Nest (1.5) an einem hinteren Ende eines inneren Lochs des inneren Verbindungszylinders (1.4) vorgesehen ist; wobei sich das Nest (1.5) in den hinteren Hohlraum erstreckt und darin mit einer Keramikhülse (2) versehen ist, und
wobei die Verbinderanordnung einen Verbinderzylinder (3) umfasst; wobei ein Dichtungsring (4), der so konfiguriert ist, dass er zu einem inneren Loch des vorderen Hohlraums eines Adapters angepasst ist, an einem Außenumfang eines vorderen Endes des Verbinderzylinders (3) vorgesehen ist; wobei eine elastische Hülse in einem mittleren vorderen Abschnitt des Verbinderzylinders (3) ummantelt ist; wobei Verriegelungsnuten (3.8), die so konfiguriert sind, dass sie zu den Verriegelungsklauen (1.2) des Adapters angepasst sind, an einem Außenumfang des Verbinderzylinders (3) in der elastischen Hülse vorgesehen sind; wobei ein inneres Loch des Verbinderzylinders (3) mit einer Zwingenanordnung versehen ist, deren vorderes Ende so konfiguriert ist, dass es zu dem inneren Loch des inneren Verbindungszylinders (1.4) an einem vorderen Abschnitt des Adapterzylinders (1) angepasst ist, wobei der Adapterzylinder (1) einen vorderen Endkopf und einen hinteren Endkopf umfasst;
**dadurch gekennzeichnet, dass** der vordere Endkopf und der hintere Endkopf dazwischen mit einer Anschlagschulter mit einem größeren Außendurchmesser versehen sind; wobei gewölbte Vorsprünge, die den Verriegelungsklauen (1.2) entsprechen, an einem Außenumfang des vorderen Endkopfes vorgesehen sind; wobei der innere Verbindungszylinder (1.4) außen rund, aber innen quadratisch ist; wobei eine Führungsnut (1.3) an einer äußeren Umfangsfläche des inneren Verbindungszylinders (1.4) vorgesehen ist; wobei ein inneres Loch des Adapterzylinders (1) ein gestuftes inneres Loch mit einem großen vorderen Abschnitt und einem kleinen hinteren Abschnitt ist, die den vorderen Hohlraum und den hinteren Hohlraum bilden; wobei die im hinteren Hohlraum vorgesehenen Haken (1) mit einem hinteren Ende des inneren Verbindungszylinders (1.4) verbunden sind; wobei eine Dichtungsnut (3.5), Verriegelungsnuten (3.8), Anschlagblöcke (3.6) und Federsitze (3.7) in Abständen von vorne nach hinten am Außenumfang des Verbinderzylinders (3) vorgesehen sind, wobei die Verriegelungsnuten so konfiguriert sind, dass sie zu den Verriegelungsklauen (1.2) angepasst sind; wobei ein Dichtungsring (4) in der Dichtungsnut (3.5) vorgesehen ist; wobei ein vorderes Ende des inneren Lochs des Verbinderzylinders (3) mit einem Höcker (3.3) versehen ist, der so konfiguriert ist, dass er zu der Führungsnut (1.3) angepasst ist, die an einer äußeren Umfangsfläche des inneren Verbindungszylinders (3) vorgesehen ist; wobei die elastische Hülse eine Hülse (6) umfasst, die auf einem Außenumfang eines vorderen Abschnitts des Verbinderzylinders (3) ummantelt ist; wobei ein vorderes Ende eines inneren Lochs der Hülse (6) mit Anschlaglochschultern (6.1) versehen ist, die so konfiguriert sind, dass sie mit Anschlagblöcken (3.6) am Außenumfang des Verbinderzylinders (3) angepasst sind und als vordere Anschläge wirken; wobei ein hinteres Ende des Inneren Lochs der Hülse (6) mit Federhohlräumen versehen ist, von denen jeder so konfiguriert ist, dass er zu einem Federsitz (3.7) des Verbinderzylinders (3) angepasst ist; wobei jeder Federhohlraum mit einer Rückstellfeder (5) versehen ist, und wobei ein hinteres Ende jeder Rückstellfeder (5) so konfiguriert ist, dass es zu jedem Federsitz (3.7) angepasst ist.

2. Wasserdichter faseroptischer Verbinder nach Anspruch 1, wobei sich die Verriegelungsklauen (1.2) und ein vorderes Ende des inneren Verbindungszylinders (1.) um eine Strecke über den vorderen Endkopf des Adapterzylinders (1) hinaus erstrecken, und wobei eine vordere Endfläche des inneren Verbindungszylinders (1.4) niedriger als die Verriegelungsklauen (1.2) ist.

3. Wasserdichter faseroptischer Verbinder nach Anspruch 1 oder 2, wobei die Verriegelungsklauen (1.2) 3 bis 5 in Umfangsrichtung beabstandete axiale Verriegelungsklauen umfassen; wobei ein vorderes Ende jeder axialen Verriegelungsklaue mit einem nach innen vorstehenden Schnapper versehen ist und ein hinteres Ende jeder axialen Verriegelungsklaue fest mit dem Adapterzylinder (1) verbunden ist; wobei 3 bis 5 Verriegelungsnuten entsprechend entlang des Außenumfangs des Verbinderzylinders (3) vorgesehen sind, und wobei ein vorderes Ende jeder Verriegelungsnut mit einem kleinen Vorsprung (3.1) versehen ist.

4. Wasserdichter faseroptischer Verbinder nach Anspruch 3, wobei 3 bis 5 Vorsprünge, die den Verriegelungsklauen (1.2) entsprechen, an einem Außenumfang des vorderen Endkopfes des Adapterzylinders (1) vorgesehen sind; wobei 3 bis 5 gewölbte innere Vorsprünge entsprechend an einem Außenumfang eines vorderen Endes der Hülse (6) vorgesehen sind, und wobei die inneren Vorsprünge in inneren Hohlräumen der Vorsprünge des Adapterzylinders (1) angeordnet sind, wenn sie eingesetzt sind.

5. Wasserdichter faseroptischer Verbinder nach Anspruch 1 oder 2, wobei die Zwingenanordnung eine Zwingenhülse (7) umfasst; wobei eine Dichtungsnut (9) an einem hinteren Abschnitt der Zwingenhülse (7) vorgesehen ist, wobei die Dichtungsnut darin mit einem Dichtungsring (9) versehen ist, der so konfiguriert ist, dass er zu dem inneren Loch des Verbinderzylinders (3) angepasst ist; wobei eine Pufferfeder (10) in einem mittleren Abschnitt der Zwingenhülse (7) ummantelt ist; wobei eine Positionierungsnut an einem hinteren Ende der Zwingenhülse (7) vorgesehen ist, wobei die Positionierungsnut mit einem elastischen Schnappring (8) versehen ist, der mit einer Hülle verbunden ist; wobei eine vordere Endfläche der Zwingenhülse (7) mit einer Zwingenschnapphülse (12) versehen ist, und wobei die Zwingenschnapphülse (12) darin mit einer Zwingenfeder (14) und einer Keramikzwingen (13) versehen ist.

6. Wasserdichter faseroptischer Verbinder nach Anspruch 1 oder 2, wobei ein hinteres Ende der Adapteranordnung mit einem faseroptischen Verbinder von SC-Typ verbunden ist und ein hinteres Ende der Verbinderanordnung ein optisches Kabel aufnimmt und so konfiguriert ist, dass es zu einer Hülle angepasst ist.

## Revendications

1. Connecteur de fibre optique étanche, comprenant un ensemble d'adaptateur et d'un ensemble de connecteur,
dans lequel l'ensemble d'adaptateur comprend un cylindre d'adaptateur (1), dans lequel sont prévues une cavité avant et une cavité arrière ; la cavité avant est pourvue d'un cylindre de connexion intérieur (1.4); des griffes de verrouillage (1.2) sont prévues entre le cylindre de connexion intérieur (1.4) et une paroi intérieure du cylindre d'adaptateur ; la cavité arrière est pourvue de crochets (1.1) ; un nid (1.5) est prévu à l'extrémité arrière d'un orifice intérieur du cylindre de connexion intérieur (1.4) ; le nid (1.5) s'étend jusqu'à la cavité arrière et est pourvu à l'intérieur de celui-ci d'un manchon en céramique (2), et
dans lequel l'ensemble de connecteur comprend un cylindre de connecteur (3) ; une bague d'étanchéité (4) configurée pour correspondre à un trou intérieur de la cavité avant d'un adaptateur est prévue sur une circonférence extérieure d'une extrémité avant du cylindre de connecteur (3) ; un manchon élastique est gainé dans une partie centrale avant du cylindre de connecteur (3) ; des rainures de verrouillage (3.8) configurées pour correspondre aux griffes de verrouillage (1.2) de l'adaptateur sont prévues sur une circonférence extérieure du cylindre de connecteur (3) dans le manchon élastique ; un trou intérieur du cylindre de connecteur (3) est pourvu d'un ensemble de virole dont une extrémité avant est configurée pour correspondre au trou intérieur du cylindre de connexion intérieur (1.4) à une partie avant du cylindre d'adaptateur (1), dans lequel le cylindre d'adaptateur (1) comprend une tête d'extrémité avant et une tête d'extrémité arrière ; **caractérisé en ce que**,
un épaulement d'arrêt ayant un diamètre extérieur plus grand est prévu entre la tête d'extrémité avant et la tête d'extrémité arrière ; des bossages en arc correspondant aux griffes de verrouillage (1.2) sont prévus sur une circonférence extérieure de la tête d'extrémité avant ; le cylindre de connexion intérieur (1.4) présente une forme extérieur ronde et une forme intérieur carrée ; une rainure de guidage (1.3) est prévue sur une surface circonférentielle extérieure du cylindre de connexion intérieur (1.4) ; un trou intérieur du cylindre d'adaptateur (1) est un trou intérieur étagé comportant une partie avant large et une partie arrière petite qui forment la cavité avant et la cavité arrière ; les crochets (1) prévus dans la cavité arrière sont connectés à une extrémité arrière du cylindre de connexion intérieur (1.4) ; dans lequel une rainure d'étanchéité (3.5), des rainures de verrouillage (3.8) configurées pour correspondre aux griffes de verrouillage (1.2), des blocs d'arrêt (3.6) et des sièges de ressort (3.7) sont prévus à intervalles de l'avant vers l'arrière sur la circonférence extérieure du cylindre de connecteur (3) ; une bague d'étanchéité (4) est prévue dans la rainure d'étanchéité (3.5) ; une extrémité avant du trou intérieur du cylindre de connecteur (3) est pourvue d'une bosse (3.3) configurée pour correspondre à la rainure de guidage (1.3) prévue sur la surface circonférentielle extérieure du cylindre de connexion intérieur (3) ; et dans lequel le manchon élastique comprend un manchon (6) gainé sur une circonférence extérieure d'une partie avant du cylindre de connecteur (3) ; une extrémité avant d'un trou intérieur du manchon (6) est pourvue d'épaulements de trou d'arrêt (6.1) configurés pour correspondre aux blocs d'arrêt (3.6) sur la circonférence extérieure du cylindre de connecteur (3) et servir de butées avant ; une extrémité arrière du trou intérieur du manchon (6) est pourvue de cavités de ressort, chacune des elles étant configurée pour correspondre à un siège de ressort (3.7) du cylindre de connecteur (3) ; chaque cavité de ressort est pourvue d'un ressort de rappel (5), et une extrémité arrière de chaque ressort de rappel (5) est configurée pour correspondre à chaque siège de ressort (3.7).

2. Connecteur de fibre optique étanche selon la revendication 1, dans lequel les griffes de verrouillage (1.2) et une extrémité avant du cylindre de connexion intérieur (1.) s'étendent sur une distance au-delà de la tête d'extrémité avant du cylindre d'adaptateur (1), et une surface d'extrémité avant du cylindre de connexion intérieur (1.4) est plus basse que les griffes de verrouillage (1.2).

3. Connecteur de fibre optique étanche selon la revendication 1 ou 2, dans lequel les griffes de verrouillage (1.2) comprennent 3 à 5 griffes de verrouillage axiales espacées le long de la circonférence ; une extrémité avant de chaque griffe de verrouillage axiale est pourvue d'un fermoir en saille vers l'intérieur, et une extrémité arrière de chaque griffe de verrouillage axiale est connectée au cylindre d'adaptateur (1) de manière fixe ; 3 à 5 rainures de verrouillage sont prévues en conséquence le long de la circonférence extérieure du cylindre de connecteur (3), et une extrémité avant de chaque rainure de verrouillage est pourvue d'un petit bossage (3.1).

4. Connecteur de fibre optique étanche selon la revendication 3, dans lequel 3 à 5 bossages correspondant aux griffes de verrouillage (1.2) sont prévus sur une circonférence extérieure de la tête d'extrémité avant du cylindre d'adaptateur (1) ; 3 à 5 bossages intérieurs en arc sont prévus sur une circonférence extérieure d'une extrémité avant du manchon (6), et les bossages intérieurs sont situés dans les cavités intérieures des bossages du cylindre d'adaptateur (1) inséré.

5. Connecteur de fibre optique étanche selon la revendication 1 ou 2, dans lequel l'ensemble de virole comprend un manchon de virole (7) ; une rainure d'étanchéité (9) est prévue à une partie arrière du manchon de virole (7), la rainure d'étanchéité étant pourvue à l'intérieur de celle-ci d'une bague d'étanchéité (9) configuré pour correspondre au trou intérieur du cylindre de connecteur (3) ; un ressort tampon (10) est gainé dans une partie centrale du manchon de virole (7) ; une rainure de positionnement est prévue à une extrémité arrière du manchon de virole (7), la rainure de positionnement étant pourvue d'un anneau fermoir élastique (8) qui est connecté à une gaine ; et une surface d'extrémité avant du manchon de virole (7) est pourvue d'un manchon de fermoir de virole (12), le manchon de fermoir de virole (12) étant pourvu à l'intérieur de celui-ci d'un ressort de virole (14) et d'un virole en céramique (13).

6. Connecteur de fibre optique étanche selon la revendication 1 ou 2, dans lequel une extrémité arrière de l'ensemble d'adaptateur est connectée à un connecteur de fibre optique de type SC ; et une extrémité arrière de l'ensemble de connecteur reçoit un câble optique et est configurée pour correspondre à une gaine.
